# FASCICULE DE BREVET EUROPEEN

(11) **EP 2 582 190 B1**
(45) Date de publication et mention de la délivrance du brevet: **18.06.2014**
(21) Numéro de dépôt: 11186384.1
(22) Date de dépôt: 24.10.2011
(51) Int. Cl.: H04W 64/00, H04W 84/04, H04W 24/02, H04W 48/16

(54) **Procédé de controle d'un boitier FEMTO installé hors du territoire d'un operateur**
Steuerverfahren für eine FEMTO-Box, die außerhalb des Gebietes eines Bedieners installiert ist
Method for controlling a FEMTO box installed outside the territory of an operator

(30) Priorité: 22.10.2010 FR 1058692
(43) Date de publication de la demande: 17.04.2013
(73) Titulaire: Société Française du Radiotéléphone-SFR, 75008 Paris (FR)
(72) Inventeur: Fattouch, Imad, 75013 PARIS (FR); Laune, Marthe, 78000 VERSAILLES (FR); Dragosevic, Damir, 75005 PARIS (FR)
(74) Mandataire: Marconnet, Sébastien

(56) Documents cités:
- EP-A1- 2 009 941
- EP-A1- 2 079 259
- EP-A2- 2 071 888
- US-A1- 2010 120 447
- 3GPP: "3rd Generation Partnership Project;Technical Specification Group Service and System Aspects;Security of H(e)NB;(Release 8)", 3GPP DRAFT; 33820-200_REVMARKS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Florence; 20090301, 1 mars 2009 (2009-03-01), XP050335028,

## Description

### DOMAINE TECHNIQUE DE L'INVENTION

L'invention concerne un procédé de contrôle d'un boîtier femto, ou tout autre dispositif comparable, en dehors du territoire de fonctionnement d'un opérateur de téléphonie. L'invention trouve une application particulièrement avantageuse dans le domaine des télécommunications.

### ETAT DE LA TECHNIQUE

Un réseau PLMN (Public Land Mobile Network) par exemple de type GSM (Global System for Mobile communication) ou UMTS (Universal Mobile Telecommunication System) appelé aussi réseau mobile comprend des stations de base assurant la gestion des télécommunications avec les téléphones mobiles des abonnés. Les stations de base sont associées à des macrocellules ayant une portée de l'ordre de 10 à 30km, des microcellules ayant une portée d'environ 500m et des picocellules ayant une portée de l'ordre de 100m.

Par ailleurs, on connaît des cellules de type femto ayant une portée réduite. Une femtocell ou femto cellule est associée à un boîtier femto installé chez un abonné relié au réseau coeur de l'opérateur (« core network » en anglais) à travers tout type de connectivité IP, notamment l'accès Internet classique via ADSL dans les foyers ou les petites entreprises. Les boîtiers femto donnent accès aux services mobiles de l'opérateur via un téléphone mobile standard, ce téléphone pouvant communiquer avec le réseau mobile sur une couverture restreinte qui est réduite généralement à une zone d'accès résidentielle ou d'entreprise.

L'usage d'un boîtier femto peut être restreint aux seuls membres du foyer ou de l'entreprise autorisés. On parle alors de mode dit « fermé » décrit dans le document W02008/047041 auquel on se référera.

L'usage du boîtier femto peut également être restreint à une communauté d'abonnés à un service spécifique consistant à mettre à disposition la couverture des boîtiers femto à toute personne de la communauté. On parle alors de mode dit « ouvert ». Bien entendu les deux modes d'accès « ouvert » et « fermé » peuvent cohabiter.

L'installation d'un boîtier femto étant réalisée directement par l'utilisateur, l'opérateur ne peut pas connaître le lieu exact de son installation. Or il est important de pouvoir détecter une installation du boîtier en dehors du territoire couvert par l'opérateur dans la mesure où l'on peut envisager des accords entre différents opérateurs dans le cadre desquels il faudrait :
- contrôler les services (voix, data, SMS, visio, certains numéros surtaxés, etc.) accessibles par l'utilisateur, et
- contrôler les paramètres du boîtier femto (fréquence utilisée, puissance, gestion des appels d'urgence, etc.) en fonction du pays dans lequel le boîtier femto est installé.

Pour détecter le lieu d'installation d'un équipement réseau raccordé à Internet, il est courant d'analyser l'adresse réseau (« adresse IP ») associée à cet équipement par rapport à une copie d'une base, par exemple de la base du « RIPE » (Réseaux IP Européens), répertoriant les différentes plages d'adresses IP publiques allouées en Europe, ainsi que les fournisseurs d'accès Internet et les pays correspondants. L'exemple du RIPE n'est bien entendu pas restrictif et peut être étendu à toute base comparable d'adresses IP existantes dans le monde. Toutefois, un boîtier femto installé à l'étranger peut se connecter au réseau de l'opérateur par l'intermédiaire d'un serveur proxy, d'un tunnel ou d'un réseau privé virtuel (VPN) et apparaître ainsi comme ayant une adresse IP du territoire de l'opérateur. Dans ce cas, le boîtier femto pourrait être considéré à tort par l'opérateur comme installé sur le territoire de l'opérateur.

Le document EP2079259 révèle la prévention de l'installation des boîtiers femto par un tiers dans une région pas autorisée en ce que le boîtier est capable de déterminer sa position au travers de plusieurs méthodes: l'analyse de l'environnement local par le boîtier, la corrélation des adresse IP du boîtier avec l'ISP et la position du terminal enregistrée dans le HLR lors de l'envoi d'un message de handover.

Le document EP2071888 décrit une méthode où la position d'un boîtier femto est déterminée suite à l'analyse des message de localisation envoyés par le terminal.

L'invention a notamment pour but de permettre une identification plus fiable du pays dans lequel le boîtier est installé afin de pouvoir en contrôler son fonctionnement en fonction de ce pays.

### OBJET DE L'INVENTION

A cet effet, dans le cas où le boîtier femto est muni d'un analyseur de réseau radio mobile (« sniffer » en anglais), le procédé selon l'invention détecte avantageusement le ou les codes réseaux de l'environnement dans lequel se trouve le boîtier femto.

Le procédé selon l'invention analyse également l'adresse réseau du boîtier femto par rapport à une copie de la base répertoriant les différentes adresses IP, par exemple, européennes des réseaux et les fournisseurs de services et les pays correspondants.

Dans l'invention, on détecte le dernier code réseau rencontré par le téléphone mobile. A cet effet, on analyse un message de localisation (« Localisation Update » en anglais) émis par le téléphone. Cette étape peut se substituer à la détection du code réseau par le boîtier femto dans le cas où ce dernier ne comporte pas d'analyseur réseau, ou en être complémentaire dans le cas où le boîtier ne recevrait aucun signal radio.

De préférence, le procédé met également en oeuvre une méthode dans laquelle on analyse les traces récurrentes des codes réseaux renvoyés par le boîtier femto ou le téléphone mobile pour déterminer si le téléphone passe fréquemment d'une connexion au réseau d'un opérateur étranger à une connexion au boîtier femto.

En fonction du résultat des différentes méthodes précitées, le réseau coeur identifie le pays dans lequel est installé le boîtier femto.

L'invention est mise en oeuvre dans le cadre d'une méthode dite de « scoring » dans laquelle on affecte un score à chaque pays potentiel, le pays dans lequel le boîtier est installé étant déterminé en fonction des différents scores attribués. Le fonctionnement du boîtier femto est alors contrôlé en fonction du pays détecté.

L'invention présente ainsi l'avantage de ne pas être sensible aux possibles erreurs de la base (par exemple RIPE) répertoriant les différentes plages d'adresses réseaux et de pouvoir détecter les boîtiers femto cherchant à se connecter au réseau de l'opérateur avec une adresse réseau différente de celle du pays où les boîtiers sont installés. L'invention permet également d'identifier les pays dans lesquels les boîtiers sont installés en l'absence de couverture radio et s'il y a lieu de se passer d'un analyseur réseau pour localiser le boîtier femto.

L'invention présente aussi l'avantage de ne pas être liée à la présence de champ radio dans l'endroit où le boîtier femto est installé. Ainsi la méthode d'analyse de réseau radio ne fonctionne pas si le boîtier femto est installé dans un endroit sans couverture (cave, etc.).

L'invention concerne un procédé comme présenté dans la revendication 1. Les modalités de réalisation sont présentées dans les revendications dépendantes.

Selon une mise en oeuvre, le procédé comporte en outre l'étape de calculer la fréquence de passage d'un code réseau d'un des pays vers un codé réseau d'un boîtier femto au moyen d'une analyse des traces des codes réseaux du téléphone dans un module HLR du réseau coeur.

Selon une mise en oeuvre, le premier score affecté à un ou plusieurs pays est différent suivant que :
- on détecte plusieurs codes réseaux d'un même pays,
- on détecte un seul code réseau du pays,
- on détecte des codes réseaux de plusieurs pays différents.

Selon une mise en oeuvre, les scores affectés sont affinés en fonction de la fréquence de passage de la connexion du téléphone mobile d'un réseau d'un des pays vers une connexion avec le boîtier femto.

Selon une mise en oeuvre, pour contrôler le boîtier femto, on applique un profil correspondant au pays détecté, ce profil comportant notamment l'autorisation pour le boîtier femto d'émettre ou non, ainsi que le paramétrage de services de téléphonie.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention. Elles montrent :
Figure 1 : une représentation schématique d'un réseau mobile dans lequel le procédé selon l'invention est mis en oeuvre;
Figure 2 : un diagramme des étapes du procédé de « scoring » selon l'invention ;
Les éléments identiques, similaires ou analogues conservent la même référence d'une figure à l'autre.

### DESCRIPTION D'EXEMPLES DE REALISATION DE L'INVENTION

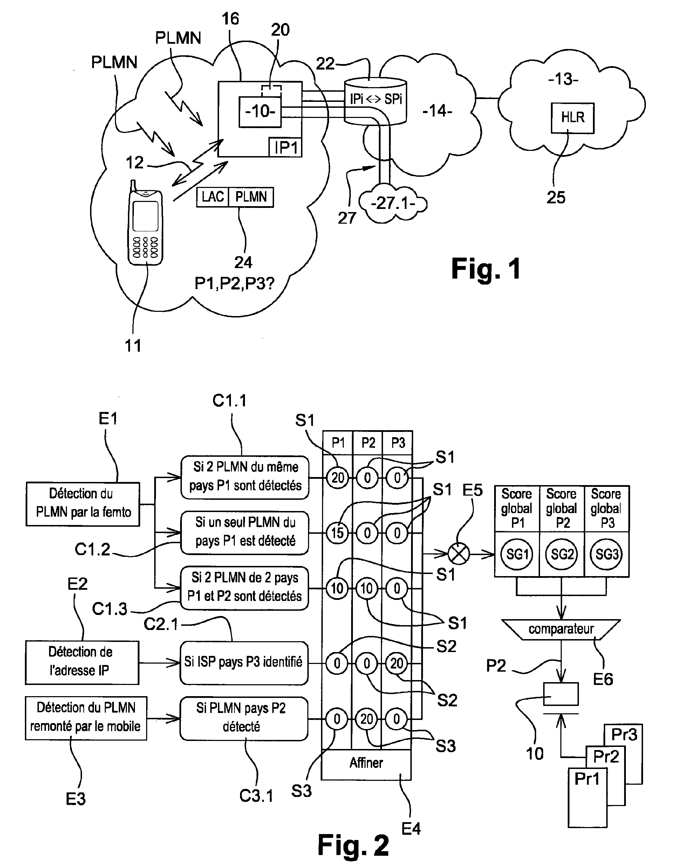

La Figure 1 montre un boîtier femto 10 en relation avec un téléphone mobile 11 via une liaison radio 12. Ce boîtier 10 est relié à un réseau coeur 13 d'un opérateur de téléphonie mobile par l'intermédiaire d'un réseau 14 de type Internet. A cet effet, le boîtier femto 10 est de préférence intégré à un module 16 modem/routeur connecté au réseau 14 par exemple via une ligne téléphonique. Ce module 16 a une adresse réseau IP1.

Le réseau coeur 13 permet aux abonnés de communiquer à l'intérieur et à l'extérieur du réseau en fournissant les moyens d'interconnexion avec d'autres réseaux fixes ou mobiles. Un code réseau PLMN est associé au réseau 13. Ce code réseau est diffusé par les stations de base de la partie radio (non représentées).

Dans d'autres pays P1-P3 d'autres codes réseaux PLMN correspondants à d'autres réseaux mobiles sont diffusés. L'invention a pour but d'identifier le pays P1-P3 dans lequel le boîtier femto 10 est installé de manière à contrôler le boîtier femto 10 en conséquence.

Le boîtier femto 10 pourra être muni ou non d'un analyseur 20 de réseau (« sniffer ») comportant un récepteur radio pour détecter les codes réseau PLMN diffusés sur le territoire où le boîtier femto 10 est installé. De préférence, cet analyseur 20 aura la bande la plus large possible pour détecter tous les types de réseaux mobiles du monde avec un décryptage de la porteuse principale afin de déduire le code réseau PLMN (pour les réseaux 2G/3G) ou son équivalent pour les autres types de réseaux.

Le boîtier femto 10 installé à l'étranger pourra être relié ou non au réseau coeur 13 via un serveur proxy, un tunnel ou un réseau privé virtuel référencé 27, de manière à se connecter au réseau coeur 13 en faisant transiter le trafic par l'intermédiaire d'un équipement 27.1 ayant une adresse IP autre que celles du fournisseur de services du territoire sur lequel le boîtier 10 est installé.

La Figure 2 montre un diagramme des étapes du procédé de « scoring » selon l'invention.

Dans une première étape E1, le boîtier 10 détecte à l'aide de l'analyseur 20 le ou les codes réseaux PLMN de l'environnement radio dans lequel le boîtier 10 se trouve. Un premier score S1 est attribué à un ou plusieurs pays P1-P3 correspondant respectivement au (ou aux) code(s) réseaux PLMN détectés par le boîtier femto 10.

Ainsi, si on détecte deux codes réseaux d'un pays P1 (condition C1.1), alors un score S1 maximal est attribué au pays P1, par exemple 20. Si on détecte un seul code réseau PLMN du pays P1 (condition C1.2), alors un score S1 intermédiaire est attribué à ce pays P1, par exemple 15. Si on détecte plusieurs codes réseaux PLMN de plusieurs pays différents (condition C1.3), alors on attribue un score S1 à chacun de ces pays. Ainsi par exemple, si on détecte deux codes réseaux PLMN de deux pays différents P1 et P2 alors on attribue un score S1 (inférieur au score intermédiaire) à ces deux pays P1, P2, par exemple 10. Le score minimal, ici 0, est affecté aux pays pour lesquels aucun code réseau PLMN correspondant n'a été détecté.

Par ailleurs, le réseau coeur 13 a accès à une copie d'une base 22, par exemple la base du RIPE (Réseaux IP Européens) en Europe, établissant la correspondance entre des plages d'adresses IP, dans le présent exemple, européennes et le fournisseur de services auquel les plages ont été attribuées, ainsi que le pays où il opère. Dans une deuxième étape E2, on utilise cette base 22 pour affecter un deuxième score S2 en fonction du pays dans lequel le fournisseur de services est présent. Ainsi si l'adresse réseau IP1 appartient à une plage identifiée pour un fournisseur de services présent sur le pays P3 (condition C2.1), alors un score maximal S2 est attribué au pays P3, par exemple le score 20. Par ailleurs, un score S2 minimal, par exemple 0, est attribué pour les pays P1, P2 non couverts par le fournisseur de services.

Egalement, suivant la norme, lors de la connexion avec le boîtier femto 10, le téléphone 11 émet un message 24 de localisation (« Localisation Update » en anglais) contenant un identifiant qui définit la zone de localisation LAC (« Location Area Code » en anglais) dans laquelle le téléphone 11 se trouvait avant de perdre la liaison radio avec le réseau, ainsi que le code réseau PLMN du dernier réseau rencontré par le téléphone 11. Dans une troisième étape E3, le réseau coeur 13, via un module 25 HLR (« Home Location Register » en anglais) contenant des données statiques relatives aux abonnements des utilisateurs et des données dynamiques de localisation, analyse le code réseau PLMN du message 24 de localisation.

Un troisième score S3 est affecté au pays correspondant à ce dernier code réseau PLMN. Ainsi si le code réseau PLMN remonté par le téléphone 11 correspond au pays P2 (condition C3.1), alors le score S3 maximal est attribué à ce pays, par exemple 20. Le score S3 minimal est affecté aux autres pays P1 et P3.

Dans une quatrième étape E4, on analyse les traces récurrentes des codes réseaux PLMN remontés par le téléphone mobile 11 et en particulier on calcule la fréquence de passage d'un code réseau PLMN d'un des pays P1-P3 vers le PLMN d'un boîtier femto 10. L'étape E4 est mise en oeuvre pour affiner les différents scores S1-S3 obtenus aux étapes E1-E3. Dans un exemple, cet affinage va consister en la multiplication des scores S1-S3 respectivement par un facteur proportionnel au nombre de passages d'un pays P1-P3 vers un boîtier femto.

Dans une étape E5, on somme les différents scores S1-S3 affinés afin d'obtenir un score global SG1-SG3 pour chaque pays P1-P3. Dans une étape E6, on compare entre eux ces différents scores SG1-SG3, ainsi on peut considérer que le boîtier femto 10 est installé dans le pays P1-P3 auquel est associé le plus grand score SG1-SG3.

Par ailleurs, un profil Pr1-Pr3 consistant en un paramétrage du boîtier femto 10 est associé à chaque pays P1-P3. Ce profil Pr1-Pr3 comporte notamment l'autorisation d'émettre ou non, ainsi que le paramétrage de certains services de téléphonie. Ce profil Pr1-Pr3 pourra être fonction des accords passés entre les opérateurs des différents pays P1-P3. On applique alors le profil Pr1-Pr3 du boîtier femto 10 correspondant au pays P1-P3 détecté, par exemple le profil Pr2 si le pays P2 est détecté.

Bien entendu, l'échelle d'attribution des scores S1-S3 peut être inversée et on attribuera alors un score S1-S3 faible à un pays P1-P3 lorsque l'on se trouvera en présence d'indices de localisation du boîtier femto 10 dans ce pays P1-P3. Dans ce cas, on pourra considérer que le boîtier femto 10 se trouve dans le pays P1-P3 auquel le plus petit score SG 1-SG3 global a été attribué.

Dans le cas où le boîtier femto 10 est dépourvu d'analyseur 20 réseau, les scores globaux SG1-SG3 sont calculés uniquement à partir des scores S2 et S3 le cas échéant affinés par l'étape E4.

## Revendications

1. Procédé pour contrôler un boîtier (10) de type femto relié à un réseau coeur (13) de téléphonie mobile par l'intermédiaire d'un module réseau (16) connecté à un réseau (14) de type Internet, ce module réseau (16) ayant une adresse réseau (IP1),
le procédé comportant les étapes suivantes :
- dans le cas où le boîtier femto (10) est muni d'un analyseur (20) de réseau, détecter (E1) un ou plusieurs codes réseau PLMN correspondant aux réseaux de l'environnement dans lequel se trouve le boîtier femto (10),
- analyser (E2) l'adresse réseau (IP1) associée au boîtier femto (10) au moyen d'une copie d'une base (22) établissant la correspondance entre des plages d'adresses réseau IP et différents fournisseurs de services,
- détecter (E3) le dernier code réseau PLMN rencontré par un téléphone mobile (11) en relation radio avec le boîtier femto (10) suite à l'envoi d'un message de localisation (24) par le téléphone mobile (11), et
- en fonction du résultat des étapes précédentes, identifier le pays (P1-P3) dans lequel le boîtier femto (10) est installé et contrôler le fonctionnement du boîtier femto (10) en fonction du pays (P1-P3) identifié, l'identification du pays comportant les étapes suivantes :
- dans le cas où le boîtier femto (10) est muni d'un analyseur (20) réseau, affecter un premier score (S1) à un ou plusieurs pays (P1-P3) correspondant respectivement à un ou plusieurs codes réseaux PLMN détectés par le boîtier femto (10),
- affecter un deuxième score (S2) à un pays (P1-P3) correspondant à l'adresse réseau (IP1) du boîtier femto (10) analysée,
- affecter un troisième score (S3) à un pays (P1-P3) correspondant au dernier code réseau PLMN détecté par le téléphone mobile,
- effectuer la somme (E5) de ces scores (S1-S3) pour chacun des différents pays (P1-P3) pour obtenir un score global (SG1-SG3) par pays et comparer (E6) les scores globaux (SG1-SG3) de chacun des pays entre eux,
- identifier le pays (P1-P3) dans lequel le boîtier femto (10) est installé en fonction du résultat de cette comparaison et contrôler le boîtier femto (10) en fonction de ce pays (P1-P3).

2. Procédé selon la revendication 1, **caractérisé en ce qu'**il comporte en outre l'étape de calculer (E4) la fréquence de passage d'un code réseau PLMN d'un des pays (P1-P3) vers un codé réseau PLMN d'un boîtier femto (10) au moyen d'une analyse des traces des codes réseaux du téléphone (11) dans un module HLR (25) du réseau coeur.

3. Procédé selon la revendication 1, **caractérisé en ce que** le premier score (S1) affecté à un ou plusieurs pays (P1-P3) est différent suivant que :
- on détecte plusieurs codes réseaux PLMN d'un même pays (C1.1),
- on détecte un seul code réseau PLMN du pays (C1.2),
- on détecte des codes réseaux PLMN de plusieurs pays différents (C1.3).

4. Procédé selon l'une des revendications 1 à 3, **caractérisé en ce que** les scores (S1-S3) affectés sont affinés en fonction de la fréquence de passage de la connexion du téléphone mobile (11) d'un réseau d'un des pays (P1-P3) vers une connexion avec le boîtier femto (10).

5. Procédé selon l'une des revendications 1 à 4, **caractérisé en ce que** pour contrôler le boîtier femto (10), on applique un profil (Pr1-Pr3) correspondant au pays détecté (P1-P3), ce profil (Pr1-Pr3) comportant notamment l'autorisation pour le boîtier femto (10) d'émettre ou non, ainsi que le paramétrage de services de téléphonie.

## Patentansprüche

1. Verfahren, um ein Gerät (10) vom Typ Femto zu kontrollieren, das über ein Netzwerkmodul (16) mit einem Mobilfunkkernnetz (13) verbunden ist, welches wiederum an ein Netz (14) vom Typ Internet angeschlossen ist,
wobei dieses Netzwerkmodul (16) eine Netzadresse (IP1) hat, dieses Verfahren umfasst folgende Etappen:
- falls das Femto-Gerät (10) mit einem Netzanalysator (20) ausgestattet ist, Feststellen (E1) eines oder mehrerer Netzcodes PLMN, die den Netzen der Umgebung entsprechen, in der sich das Femto-Gerät (10) befindet,
- Analysieren (E2) der Netzadresse (IP1), die mit dem Femto-Gerät (10) mit Hilfe einer Kopie einer Basis (22) verbunden ist, die die Korrespondenz zwischen Adressbereichen von IP-Netzadressen und verschiedenen Dienstanbietern herstellt,
- Erkennen (E3) des letzten Netzcodes PLMN, der ein über Funk mit dem Femto-Gehäuse verbundenes Mobiltelephon (11) in Folge des Sendens einer Ortungsnachricht von diesem Mobiltelefon (11) erreicht hat,
und
- je nach Ergebnis der vorhergehenden Etappen, Identifizierung des Landes (P1-P3), in dem das Femto-Gehäuse (10) installiert ist und Kontrollieren der Funktion des Femto-Gehäuses (10) gemäß dem identifizierten Land (P1-P3), wobei die Identifizierung des Landes die folgenden Etappen umfasst:
- falls das Femto-Gehäuse (10) mit einem Netzanalysator (20) ausgestattet ist, Zuweisen eines ersten Standes (S1) zu einem oder mehreren Ländern (P1-P3), die jeweils einem oder mehreren, durch das Femto-Gerät (10) erkannten Netzcodes PLMN entsprechen,
- Zuweisen eines zweiten Standes (S2) zu einem Land (P1-P3), das der analysierten Netzadresse (IP1) des Femto-Gehäuses (10) entspricht,
- Zuweisen eines dritten Standes (S3) zu einem Land (P1-P3), das dem letzten vom Mobiltelefon erkannten Netzcode PLMN entspricht,
- Durchführung der Summierung (E5) dieser Stände (S1-S3) für jedes der verschiedenen Länder (P1-P3), um einen globalen Stand (SG1-SG3) pro Land zu erhalten, und Vergleichen (E6) der globalen Stände (SG1-SG3) von jedem der Länder untereinander,
- Identifizierung des Landes (P1-P3), in dem das Femto-Gerät (10), gemäß dem Ergebnis dieses Vergleichs installiert ist, und Kontrollieren des Femto-Gerätes (10) gemäß diesem Land (P1-P3).

2. Verfahren nach Anspruch 1, **dadurch gekennzeichnet, dass** es außerdem eine Etappe (E4) umfasst, bei der die Häufigkeit des Durchlaufs eines Netzcodes PLMN eines Landes (P1-P3) in Richtung eines Netzcodes PLMN eines Femto-Gerätes (10) mit Hilfe einer Analyse der Spuren der Netzcodes des Telefons (11) in einem HLR-Modul (25) des Kernnetzes berechnet wird.

3. Verfahren nach Anspruch 1, **dadurch gekennzeichnet, dass** der erste einem oder mehreren Ländern (P1-P3) zugewiesene Stand (S1) unterschiedlich ist, je nachdem ob man:
- mehrere Netzcodes PLMN des selben Landes erkennt (C1.1)
- nur einen Netzcode PLMN des Landes erkennt (C1.2)
- Netzcodes PLMN von mehreren verschiedenen Länder erkennt (C1.3).

4. Verfahren nach einem der Ansprüche 1 bis 3, **dadurch gekennzeichnet, dass** die betroffenen Stände (S1-S3) je nach Häufigkeit des Durchlaufs der Verbindung des Mobiltelefons (11) von einem Netz eines der Länder (P1-P3) in Richtung einer Verbindung mit dem Femto-Gerät (10) überarbeitet werden.

5. Verfahren nach einem der Ansprüche 1 bis 4, **dadurch gekennzeichnet, dass** man, um das Femto-Gerät (10) zu kontrollieren, ein Profil (Pr1-Pr3) anwendet, welches dem erkannten Land (P1-P3) entspricht, dabei enthält dieses Profil (Pr1-Pr3) insbesondere die Autorisierung für das Femto-Gerät (10) zu senden oder nicht, sowie die Parametrierung von Telefoniediensten.

## Claims

1. A method for testing a femto-type box (10), connected to a mobile telephone infrastructure network (13), through a network module (16), connected to an Internet-type network (14), this network module (16) having a network address (IP1),
the method including the following steps:
- in the case where the femto-box (10) is equipped with a network analyser (20), detecting (E1) one or several PLMN network codes corresponding to the networks in the environment wherein the femto-box (10) is located,
- analysing (E2) the network address (IP1) associated with the femto-box (10) by means of a copy of the database (22), establishing the correspondence between the ranges of IP network addresses and different service providers,
- detecting (E3) the last PLMN network code received by a mobile telephone (11), in radio contact with the femto-box (10), following the sending of a localisation message (24) by the mobile telephone (11), and
- in accordance with the result of the previous steps, identifying the country (P1-P3) wherein the femto-box (10) is installed and testing the functioning of the femto-box (10) in accordance with the country (P1-P3) identified, the identification of the country including the following steps:
- in the case where the femto-box (10) is equipped with a network analyser (20), assigning a first score (S1) to one or several countries (P1-P3), corresponding respectively to one or several PLMN network codes detected by the femto-box (10),
- assigning a second score (S2) to one country (P1-P3), corresponding to the network address (IP1) of the femto-box (10) analysed,
- assigning a third score (S3) to one country (P1-P3), corresponding to the last PLMN network code detected by the mobile telephone,
- producing the sum (E5) of these scores (S1-S3) for each one of the different countries (P1-P3) to obtain an overall score (SG1-SG3) by country, and comparing (E6) the overall scores (SG1-SG3) of the countries to each other,
- identifying the country (P1-P3) wherein the femto-box (10) is installed in accordance with the result of this comparison, and testing the femto-box (10) in accordance with this country (P1-P3).

2. A method according to the claim 1, **characterised in that** it includes, in addition, the step of calculating (E4) the frequency of a PLMN network code passing from one of the countries (P1-P3) to a PLMN network code of a femto-box (10), by means of a telephone (11) network code trace analysis in an HLR module (25) of the infrastructure network.

3. A method according to the claim 1, **characterised in that** the first score (S1) assigned to one or several countries (P1-P3) is different whether:
- several PLMN network codes from one same country (C1.1) are detected,
- one single PLMN network code from the country (C1.2) is detected,
- PLMN network codes are detected from several different countries (C1.3).

4. A method according to one of the claims 1 to 3, **characterised in that** the assigned scores (S1-S3) are refined in accordance with the passing frequency of the mobile telephone (11) connection from a network from one of the countries (P1-P3) to a connection with the femto-box (10).

5. A method according to one of the claims 1 to 4, **characterised in that** to test the femto-box (10), a profile (Pr1-Pr3) corresponding to the country detected (P1-P3) is applied, this profile (Pr1-Pr3) particularly including the authorisation for the femto-box (10) to transmit or not, together with the configuration of telephony services.
